# EUROPEAN PATENT SPECIFICATION

(11) **EP 4 394 232 B1**
(45) Date of publication and mention of the grant of the patent: **13.08.2025**
(21) Application number: 23307306.3
(22) Date of filing: 21.12.2023
(51) Int. Cl.: F16M 13/02

(54) **MOUNTING BRACKET AND SENSOR ASSEMBLY**
MONTAGEKLAMMER UND SENSORANORDNUNG
SUPPORT DE MONTAGE ET ENSEMBLE CAPTEUR

(30) Priority: 29.12.2022 CN 202223544183 U
(43) Date of publication of application: 03.07.2024
(73) Proprietor: SCHNEIDER ELECTRIC INDUSTRIES SAS, 92500 Rueil-Malmaison (FR)
(72) Inventor: CHEN, Lejian, Shenzhen, 518000 (CN); WU, Tuming, Shenzhen, 518000 (CN); HE, Carmen, Gepps Cross, SA, 5094 (AU); WAGNER, Ingo, 51674 Wiehl (DE); ZHOU, Jifeng, Shenzhen, 518000 (CN)
(74) Representative: Manitz Finsterwald Patent- und Rechtsanwaltspartnerschaft mbB

(56) References cited:
- WO-A1-99/44472
- CN-U- 201 706 162
- DE-U1- 9 303 267
- GB-A- 2 384 520
- JP-A- 2001 238 101
- US-A- 1 219 596
- US-A1- 2006 237 603

## Description

### FIELD

The present disclosure relates to the technical field of mounting of devices, and more specifically to a mounting bracket and a sensor assembly comprising the mounting bracket.

### BACKGROUND

**In** some indoor and outdoor scenarios, sensing devices such as motion sensors may be utilized to sense people's activities or other conditions in an area or space for intelligent control in terms of lighting, household appliances, etc. to provide convenience for people's work and life.

These sensing devices may be mounted in locations such as walls that facilitate sensing of large areas and spaces without interfering with people's activities. However, there are currently more problems with the installation of these devices. For example, the device cannot be conveniently mounted anywhere on a wall, installation of the wire conduits of the device is inconvenient, and the overall appearance is affected.

WO 99/44472 A1 discloses a mounting bracket for mounting a camera base to a variety of different support structures. The mounting bracket includes a plurality of rectangular-shaped panel sections configured to mount the mounting bracket to a flat wall, an inside corner or an outside corner of a building. DE 93 03 267 U1 discloses a mounting base for a lamp or a motion detector. The mounting base includes fastening elements for mounting the base on an interior or an exterior corner of a wall.

### SUMMARY

To at least partially address the above and other potential problems, embodiments of the present disclosure provide a mounting bracket and a sensor assembly including the mounting bracket.

According to a first aspect of the present disclosure, there is provided a mounting bracket comprising: a first surface adapted to engage a device to be mounted; and a second surface opposite the first surface, and comprising: a first mounting region formed as a planar structure and adapted to be mounted to a planar surface, wherein the first mounting region comprises a first mounting surface and a second mounting surface, and the first mounting surface and the second mounting surface are separate from each other and extend in the same plane; and a second mounting region formed as an angled structure and adapted to be mounted to a non-planar surface. The second surface further comprises a first sidewall portion and/or a second sidewall portion, wherein the first sidewall portion extends from an edge of the second mounting region to a position aligned with the first mounting region, the first sidewall portion being removable, and wherein the second sidewall portion extends from edges of the first mounting region and the second mounting region in a direction toward the first surface, a portion of the second sidewall portion being removable.

**In** embodiments of the present disclosure, the mounting bracket may be mounted to a variety of positions, such as corners, wall surfaces, and ceilings, by providing a variety of mounting regions on the surface of the mounting bracket, which effectively increases the application scenarios and scope of the mounting bracket and the motion sensor or other devices engaged by the mounting bracket.

**In** some embodiments of the present disclosure, the second mounting region comprises a first sub-region and a second sub-region, the first sub-region is formed as a structure with a first angle and adapted to be mounted to an interior wall corner, and the second sub-regions are formed as a structure with a second angle and adapted to be mounted to an exterior wall corner. Through this embodiment, the mounting bracket may be mounted to both an interior wall corner and an exterior wall corner, thereby increasing the application scenario of the mounting bracket.

According to the invention, the first mounting region comprises a first mounting surface and a second mounting surface, wherein the first mounting surface and the second mounting surface are separate from each other and extend in the same plane. Through this embodiment, it is possible to ensure that the mounting bracket is stably placed on the plane surface, and reduce the occupation area of the first mounting region to some extent.

**In** some embodiments of the present disclosure, the first sub-region of the second mounting region comprises a third mounting surface and a fourth mounting surface, an extension plane where the third mounting surface lies and an extension plane where the fourth mounting surface lies forming the first angle to fit the interior wall corner; the second sub-region of the second mounting region comprises a fifth mounting surface and a sixth mounting surface, the fifth mounting surface and the sixth mounting surface forming the second angle to fit an exterior wall corner. Through this embodiment, the mounting bracket may be mounted to the interior wall corner and exterior wall corner in a simple manner.

**In** some embodiments of the present disclosure, the third mounting surface is located on a side of the first mounting surface away from the second mounting surface and obliquely extends from a first edge of the first mounting surface in a direction toward the first surface; the fourth mounting surface is located on a side of the second mounting surface away from the first mounting surface and obliquely extends from a first edge of the second mounting surface in a direction toward the first surface; the fifth mounting surface and the sixth mounting surface are located between the first mounting surface and the second mounting surface, the fifth mounting surface extends obliquely from a second edge of the first mounting surface in a direction toward the first surface, and the sixth mounting surface extends obliquely from a second edge of the second mounting surface in a direction toward the first surface. Through this embodiment, it is possible to make full use of the surface area of the second surface and ensure that the various mounting regions for interior wall corner mounting, exterior wall corner mounting and planar mounting do not interfere with and affect each other.

According to the invention, the mounting bracket further comprises a first sidewall portion extending from an edge of the second mounting region to a position aligned with the first mounting region, the first sidewall portion being removable. Though this embodiment, it may be ensured that the mounting bracket is on the whole complete and aesthetically pleasant when the mounting bracket is mounted on a planar surface, and when the mounting bracket is mounted to the exterior wall corner or interior wall corner, the first sidewall portion may be removed without affecting the mounting.

According to the invention, the mounting bracket further comprises a second sidewall portion extending from edges of the first mounting region and second mounting region in a direction toward the first surface, a portion of the second sidewall portion being removable. Through the embodiment, the second sidewall portion helps to receive and mount the base of the device to be mounted, and removing a portion of sidewall upon mounting the conductor wires or wire conduits facilitates the mounting of the conductor wires or wire conduits and ensures integrity and aesthetics after the mounting.

**In** some embodiments of the present disclosure, the second sub-region of the second mounting region is provided with an opening to enable the conductor wires or wire conduits to pass through the mounting bracket from a side of the second surface to a side of the first surface. Through this embodiment, the conductor wires or wire conduits may be enabled to pass through the interior of the mounting bracket to reach the device to be mounted, thereby ensuring integrity and aesthetics after the mounting.

**In** some embodiments of the present disclosure, the first mounting region and each sub-region of the second mounting region are provided with mounting holes, and the first surface is provided with mounting studs. Through this embodiment, mounting and fixing of the device and the mounting bracket can be achieved in a simple and reliable manner.

**In** some embodiments of the present disclosure, the mounting bracket is integrally formed. Though this embodiment, the mounting bracket may be manufactured at a low cost and has the advantage of being robust and reliable.

**In** some embodiments of the present disclosure, the first angle and the second angle are right angles. Through the embodiment, it can be ensured that the mounting bracket may be adapted for most wall corner mounting scenarios.

According to a second aspect of the present disclosure, there is provided a sensor assembly comprising: the mounting bracket according to the first aspect; and a motion sensor engaged to the mounting bracket.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

Through the following detailed description of exemplary embodiments of the present disclosure with reference to the accompanying drawings, the above and other objects, features and advantages of the present disclosure will become more apparent, where the same reference numbers generally refer to the same elements in the exemplary embodiments of the present disclosure.
FIG. 1 illustrates a perspective view of a sensor assembly according to an embodiment of the present disclosure.
FIG. 2 illustrates a perspective view of a mounting bracket according to an embodiment of the present disclosure as viewed from a first perspective view.
FIG. 3 illustrates a side view of a mounting bracket according to an embodiment of the present disclosure.
FIG. 4 illustrates a schematic view of a mounting bracket and a motion sensor mounted to a wall surface according to an embodiment of the present disclosure.
FIG. 5 illustrates a schematic view of a mounting bracket and a motion sensor mounted to an interior wall corner according to an embodiment of the present disclosure.
FIG. 6 illustrates a schematic view of a mounting bracket and a motion sensor mounted to an exterior wall corner according to an embodiment of the present disclosure.
FIG. 7 illustrates a perspective view of a mounting bracket according to an embodiment of the present disclosure as viewed from a second perspective view.
FIG. 8 illustrates a bottom view of a side of a first surface of a mounting bracket according to an embodiment of the present disclosure.
FIG. 9 illustrates a perspective view of a mounting bracket mounted with wire conduits and a motion sensor according to an embodiment of the present disclosure.

### DETAILED DESCRIPTION OF EMBODIMENTS

Embodiments of the present disclosure will be described as follows in greater detail with reference to the drawings. Although embodiments of the present disclosure are illustrated in the drawings, it is to be understood that the present disclosure described herein can be implemented in various manners, not limited to the embodiments illustrated herein. Rather, these embodiments are provided to make the present disclosure described herein clearer and more complete and convey the scope of the present disclosure described herein completely to those skilled in the art. Those skilled in the art may obtain alternative technical solutions from the following description without departing from the spirit and scope of the disclosure.

As used herein, the term "comprises" and its variants are to be read as open-ended terms that mean "comprises, but is not limited to." The term "or" is to be read as "and/or" unless the context clearly indicates otherwise. The term "based on" is to be read as "based at least in part on." The term "one example embodiment" and "an example embodiment" are to be read as "at least one example embodiment." The following text may also contain other explicit or implicit definitions.

Embodiments of the present disclosure provide a novel mounting bracket solution. In this solution, the mounting bracket may be adapted for a variety of mounting scenarios, at least including planar mounting and corner mounting. Thus, a device to be mounted, such as a motion sensor, coupled to a mounting bracket may be conveniently fixed to any position of corners, walls, ceilings, floors, etc. without the need for complex modifications to the walls and devices to be mounted. In addition, the mounting bracket may conveniently mount the wires and the wire conduits in a plurality of directions without affecting the overall appearance.

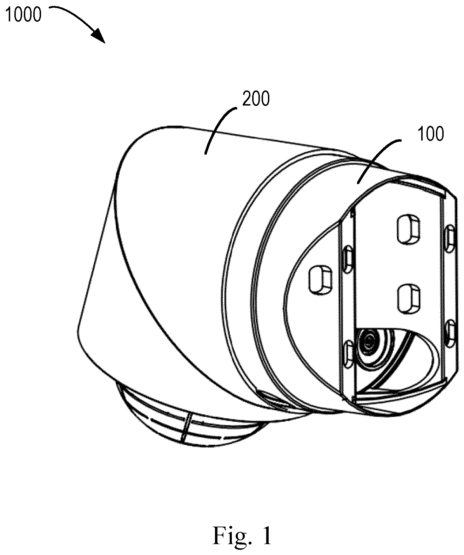

FIG. 1 illustrates a perspective view of a sensor assembly 1000 according to an embodiment of the present disclosure. As shown in FIG. 1, the sensor assembly 1000 comprises a mounting bracket 100 and a motion sensor 200. The motion sensor 200 is engaged with the mounting bracket 100. As an example, the motion sensor 200 may be used in cooperation with a lighting device or other devices to enable intelligent control of the lighting devices or other devices. In one embodiment, the motion sensor 200 may include a base that may be engaged with the mounting bracket 100 to enable relative fixation of the motion sensor 200 to the mounting bracket 100.

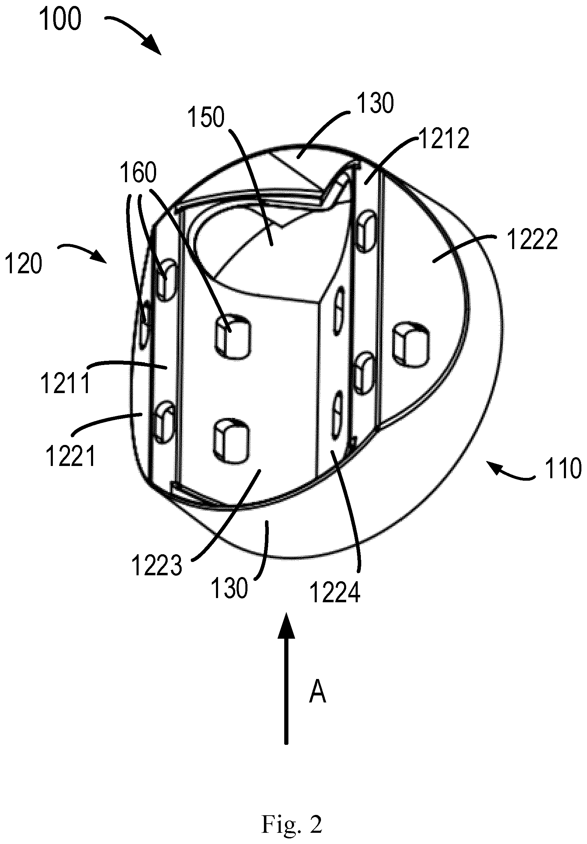

FIG. 2 illustrates a perspective view of a mounting bracket 100 according to an embodiment of the present disclosure as viewed from a first perspective view. The mounting bracket 100 may be used to engage the motion sensor 100 to aid in mounting the motion sensor 100 to various positions including walls, corners, ceilings, floors, etc. It will be appreciated that in addition to the motion sensor 100, the mounting bracket 100 may also be used to engage other types of devices to be mounted to assist in mounting the devices to be mounted in place.

As shown in FIG. 2, the mounting bracket 100 comprises a first surface 110 and a second surface 120. The first surface 110 is adapted to engage the motion sensor 100 or the device to be mounted, and the second surface 120 is opposite the first surface 110. By way of example, the second surface 120 may be attached to a variety of different positions, such as a corner, a wall surface, a ceiling, a floor, etc. In this manner, the mounting bracket 100 may help secure the motion sensor 100 or the device to be mounted in a desired position.

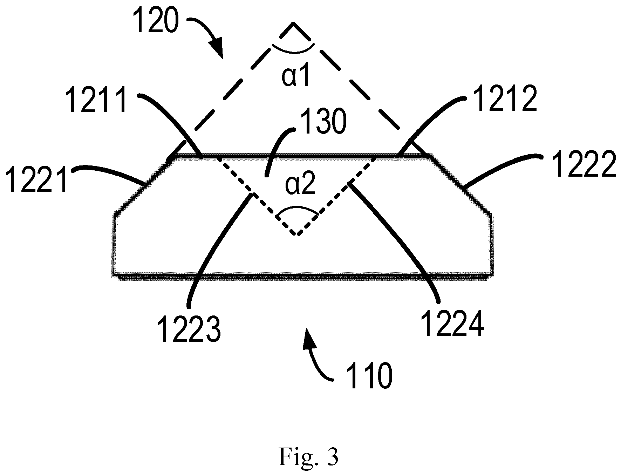

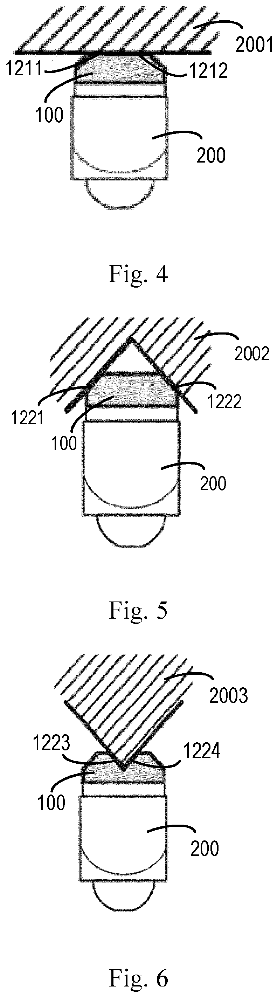

FIG. 3 illustrates a side view of the mounting bracket 100 as viewed in direction A in FIG. 2, FIG. 4 illustrates a schematic view of the mounting bracket 100 and the motion sensor 200 mounted to a wall surface 2001, FIG. 5 illustrates a schematic view of the mounting bracket 100 and the motion sensor 200 mounted to an interior wall corner 2002, and FIG. 6 illustrates a schematic view of the mounting bracket 100 and the motion sensor 200 mounted to an exterior wall corner 2003. Hereinafter, the mounting bracket 100 will be described in detail with reference to FIG. 2 to FIG. 6.

According to an embodiment of the present disclosure, the second surface 120 of the mounting bracket 100 comprises a first mounting region, wherein the first mounting region is formed as a planar structure and is adapted to be mounted to a planar surface. By way of example, the first mounting region generally appears planar, whereby when the mounting bracket 100 is mounted to a wall, ceiling, floor, or other generally flat mounting position, the first mounting region may be securely attached to the mounting position, thereby helping to secure the mounting bracket 100 and the device to be mounted in place. In some embodiments of the present disclosure, the first mounting region comprises a first mounting surface 1211 and a second mounting surface 1212, wherein the first mounting surface 1211 and the second mounting surface 1212 are separate from each other and extend in the same plane. By providing the two mounting surfaces 1211 and 1212 which are in the same plane and separated from each other, it is possible to ensure that the mounting bracket 100 is stably placed on the plane surface, and reduce the occupation area of the first mounting region to some extent.

According to embodiments of the present disclosure, the second surface 120 of the mounting bracket 100 further comprises a second mounting region formed as an angled structure and adapted to be mounted to a non-planar surface. By way of example, the second mounting region as a whole exhibits an angled structure, whereby when the mounting bracket 100 is mounted to a mounting position such as a corner of a wall, the shape of the second mounting region may cooperate with the angled shape of the mounting position to determine that the mounting bracket 100 can be firmly attached to the mounting position. By forming a variety of mounting regions on the second surface 120, the mounting bracket 100 may be attached to a variety of different mounting positions, thereby greatly widening the application and scope of the mounting bracket 100.

The second mounting region may comprise a first sub-region and a second sub-region. The first sub-region is formed as a structure with a first angle α1 (see FIG. 3) and adapted to be mounted to an interior wall corner 2002; the second sub-regions 1223, 1224 are formed as a structure with a second angle α2 (see FIG. 3) and adapted to be mounted to an exterior wall corner 2003. With the first sub-regions and the second sub-regions being provided, the mounting bracket 100 may be mounted to both an interior wall corner and an exterior wall corner, which greatly increases the application scenario of the mounting bracket 100. It will be appreciated that only the first sub-regions or the second sub-regions may also be provided, and that in this case the area of the omitted sub-regions may be used to increase the area of the provided sub-regions and the first mounting region. However, it is more preferable to provide the first mounting region and the first sub-regions and the second sub-regions of the second mounting region at the same time, because this makes the mounting bracket 100 adapted to be mounted in three scenarios, namely, a plane, an interior wall corner and an outer corner, so that the mounting bracket 100 and the motion sensor 200 may be applied to most indoor and outdoor mounting scenarios, which substantially improves the difficulty in mounting the motion sensor 200 and other devices to be mounted.

The first sub-region may include a third mounting surface 1221 and a fourth mounting surface 1222, wherein an extension plane where the third mounting surface 1221 lies and an extension plane where the fourth mounting surface 1222 lies form a first angle α1 to fit the interior wall corner 2002. As an example, when the mounting bracket 100 is made abut against the interior wall corner 2002, the third mounting surface 1221 and the fourth mounting surface 1222 may abut against two wall surfaces of the interior wall corner 2002, respectively, thereby securely mounting the mounting bracket 100 to the interior wall corner 2002. The second sub-region may include a fifth mounting surface 1223 and a sixth mounting surface 1224 that form a second angle α2 to fit an exterior wall corner 2003. As an example, the fifth mounting surface 1223 and the sixth mounting surface 1224 may abut against two wall surfaces of the exterior wall corner 2003, respectively, thereby securely mounting the mounting bracket 100 to the exterior wall corner 2003.

The third mounting surface 1221 is located on a side of the first mounting surface 1211 away from the second mounting surface 1212 and obliquely extends from a first edge of the first mounting surface 1211 in a direction toward the first surface 110, and the fourth mounting surface 1222 is located on a side of the second mounting surface 1212 away from the first mounting surface 1211 and obliquely extends from a first edge of the second mounting surface 1212 in a direction toward the first surface 110. The fifth mounting surface 1223 and the sixth mounting surface 1224 are located between the first mounting surface 1211 and the second mounting surface 1212, the fifth mounting surface 1223 extends obliquely from the second edge of the first mounting surface 1211 in a direction toward the first surface 110, and the sixth mounting surface 1224 extends obliquely from the second edge of the second mounting surface 1212 in a direction toward the first surface 110.

In this manner, the first to sixth mounting surfaces constitute the second surface 120 having a continuous surface, wherein the third mounting surface 1221 and the fifth mounting surface 1223 extend obliquely downward from both sides of the first mounting surface 1211, respectively, and the fourth mounting surface 1222 and the sixth mounting surface 1224 extend obliquely downward from both sides of the second mounting surface 1212, respectively. Thus, an angled structure matching the interior wall corner is formed on the outside of the second surface 120, an angled structure matching the exterior wall corner is formed on the inside of the second surface 120, and the raised first mounting surface 1211 and second mounting surface 1212 form a planar structure suitable for planar mounting. Such a structure makes full use of the surface area of the second surface 120 and ensures that the various mounting regions for interior wall corner mounting, exterior wall corner mounting and planar mounting do not interfere with and affect each other.

In some embodiments of the present disclosure, the first angle α1 and the second angle α2 are right angles. Since the corners of most walls are at right angles, setting the angles as right angles may ensure that the mounting bracket 100 may be adapted for most wall corner mounting scenarios. It will be appreciated that where the angle of the wall corner is a non-right angle, the first angle α1 and the second angle α2 may also be other angles matching the angle of the wall corner.

In some embodiments of the present disclosure, the mounting bracket 100 may further comprise a removable first sidewall portion 130 (see FIG. 2 and FIG. 3) that extends from an edge of the second mounting region to a position aligned with the first mounting region. For example, the first sidewall portion 130 extends from edges of both sides of the fifth mounting surface 1223 and the sixth mounting surface 1224 to a position aligned with the first mounting surface 1211 and the second mounting surface 1212. Furthermore, although not shown in FIG. 2 and FIG. 3, the first sidewall portion 130 may also extend from an edge of the third mounting surface 1221 and/or an edge of the fourth mounting surface 1222 to a position aligned with the first mounting surface 1211 and the second mounting surface 1212. When the mounting bracket 100 is mounted to a planar surface such as a wall surface, a ceiling, and a floor, the first sidewall portion 130 may ensure that the overall appearance of the mounting bracket 100 is complete and aesthetically pleasant, and when the mounting bracket 100 is mounted to the exterior wall corner or interior wall corner, the first sidewall portion 130 may be removed, thereby not affecting the mounting of the mounting bracket 100.

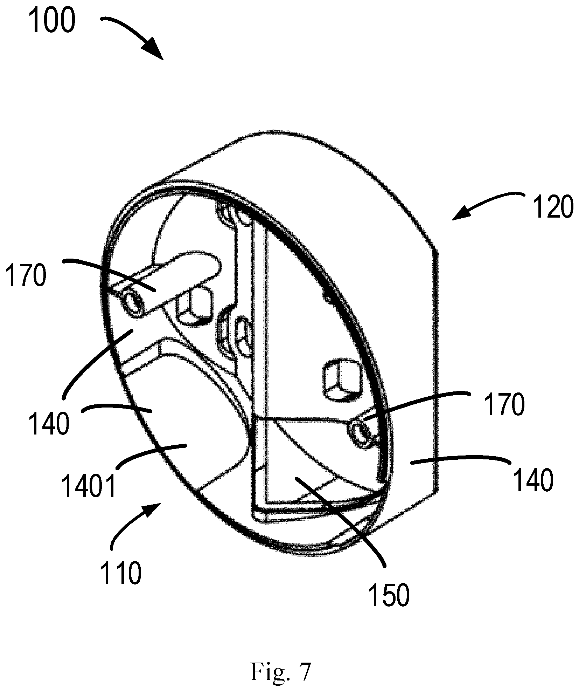

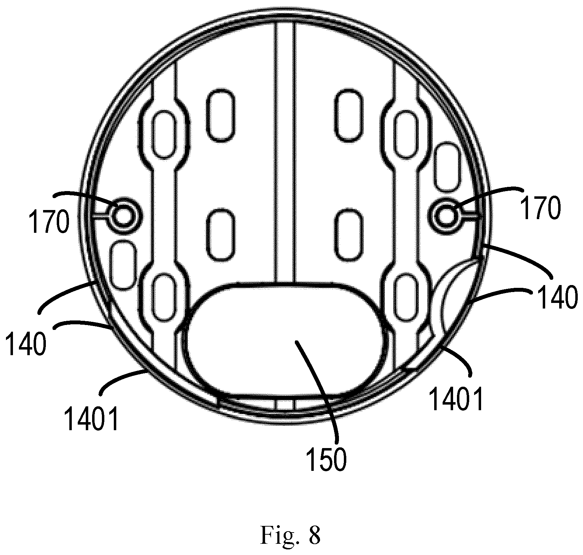

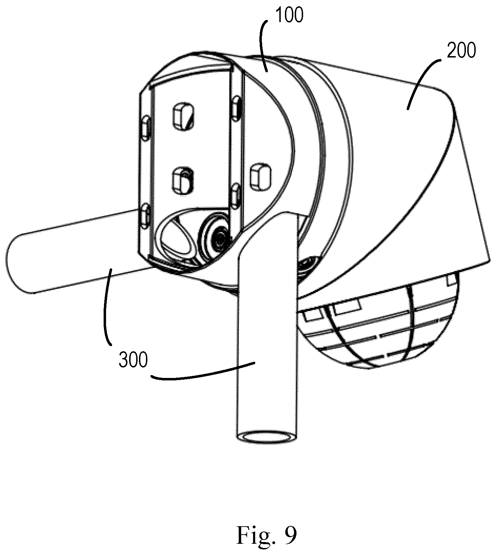

FIG. 7 illustrates a perspective view of the mounting bracket 100 according to an embodiment of the present disclosure as viewed from a second perspective view, FIG. 8 illustrates a bottom view of a side of the first surface 110 of the mounting bracket 100 according to an embodiment of the present disclosure; and FIG. 9 illustrates a perspective view of the mounting bracket 100 mounted with wire conduits 300 and the motion sensor 200.

As shown in FIG. 7 and FIG. 8, the mounting bracket 100 may further comprise a second sidewall portion 140. The second sidewall portion 140 extends from edges of the first mounting region and second mounting region in a direction toward the first surface 110. For example, the second sidewall portion 140 may extend from an edge of one or more of the first mounting surface 1211, the second mounting surface 1212, the third mounting surface 1221, the fourth mounting surface 1222, the fifth mounting surface 1223, and the sixth mounting surface 1224 to form an annular wall surrounding the first surface 110, and an space formed by the annular wall and the first surface 110 may be used to receive the motion sensor 200 or the base of the device to be mounted. Further referring to FIG. 9, a portion of sidewall 1401 of the second sidewall portion 140 can be removed upon mounting conductor wires or wire conduits 300 to the motion sensor 200 or to the device to be mounted. Specifically, the motion sensor 200 or device to be mounted may need to be connected to a utility grid or other power source through conductor wires or wire conduits 300. To this end, the portion of side wall 1401 of the second sidewall portion 140 may be set removable, e.g., the removable sidewall 1401 may be set thinner than other portions of the second sidewall portion 140, or may be made of a breakable material. Thus, with the portion of sidewall 1401 being removed, the conductor wires and wire conduits 300 can enter the interior of the mounting bracket 100 in any direction from the side of the mounting bracket 100, so that the mounting and connection of the conductor wires and wire conduits 300 is achieved without destroying or affecting the overall appearance of the mounting bracket 100 and motion sensor 200.

In some embodiments of the present disclosure, the second sub-regions of the second mounting region are provided with an opening 150 to enable the conductor wires or wire conduits 300 to pass through the mounting bracket 100 from a side of the second surface 120 to a side of the first surface 110. For example, the opening 150 (see FIG. 2, FIG. 2 and FIG. 8) may be provided in the fourth mounting surface 1223 and/or the fifth mounting surface 1224, so that the external conductor wires and wire conduits 300 can continue to connect with the motion sensor 200 or device to be mounted through the mounting bracket 100 after passing through the removable portion 1401 of the second sidewall portion 140, or connect with the motion sensor 200 or device to be mounted directly through the mounting bracket 100 without passing through the second sidewall portion 140.

In some embodiments of the present disclosure, each sub-region of the first mounting region and the second mounting region is provided with a mounting hole 160. For example, the mounting holes 160 may be provided on one or both of the first mounting surface 1211 and the second mounting surface 1212 so as to secure the mounting bracket 100 to a wall, ceiling, floor, or other planar position by screws or bolts when performing the planar mounting shown in FIG. 4. Similarly, the mounting hole 160 may be provided on one or both of the third mounting surface 1221 and the fourth mounting surface 1222, and on one or both of the fifth mounting surface 1223 and the sixth mounting surface 1224, to achieve corresponding mounting and securing. In addition, the first surface 110 may be provided with mounting studs 170 (see FIG. 7 and FIG. 8). By means of the mounting studs 170 and corresponding bolts, the mounting bracket 100 may be firmly engaged to the device to be mounted, for example to the base of the motion sensor 100. In some embodiments, the mounting bracket 100 may be integrally formed. In this way, the mounting bracket 100 may be manufactured at a low cost and has the advantage of being robust and reliable.

In embodiments of the present disclosure, the mounting bracket may be mounted to a variety of positions, such as corners, wall surfaces, and ceilings, by providing a variety of mounting regions on the surface of the mounting bracket, which increases the application scenarios and scope of the mounting bracket and the motion sensor or other devices engaged by the mounting bracket. In addition, the mounting bracket of the present disclosure may also conveniently mount conductor wires and wire conduits in multiple directions without affecting the overall appearance.

Through the teaching given by the above depictions and related figures, many modifications and other embodiments of the present disclosure will be apparent to those skilled in the art. Therefore, it is to be appreciated that the embodiments of the present disclosure are not limited to the disclosed specific embodiments, and modifications and other embodiments are intended to be comprised within the scope of the present disclosure. In addition, while the above description and related figures have described example embodiments in the context of certain example combinations of components and/or functions, it should be appreciated that different combination forms of the components and/or functions may be provided by alternative embodiments without departing from the scope of the present disclosure. In this regard, for example, other combination forms of components and/or functions that are different from those explicitly described above are also contemplated as being within the scope of the present disclosure. Although specific terms are employed herein, they are used in a generic and illustrative sense and are not intended to be limiting.

## Claims

1. A mounting bracket (100), wherein the mounting bracket (100) comprises:
a first surface (110) adapted to engage a device to be mounted; and
a second surface (120) being opposite the first surface (110), and comprising:
a first mounting region (1211, 1212) formed as a planar structure and adapted to be mounted to a planar surface (2001), wherein the first mounting region (1211, 1212) comprises a first mounting surface (1211) and a second mounting surface (1212), and the first mounting surface (1211) and the second mounting surface (1212) are separate from each other and extend in the same plane;
a second mounting region (1221, 1222, 1223, 1224) formed as an angled structure and adapted to be mounted to a non-planar surface (2002, 2003); and **characterized in** further comprising
a first sidewall portion (130) and/or a second sidewall portion (140), wherein the first sidewall portion (130) extends from an edge of the second mounting region (1221, 1222, 1223, 1224) to a position aligned with the first mounting region (1211, 1212), the first sidewall portion (130) being removable, and wherein the second sidewall portion (140) extends from edges of the first mounting region (1211, 1212) and the second mounting region (1221, 1222, 1223, 1224) in a direction toward the first surface (110), a portion (1401) of the second sidewall portion (140) being removable.

2. The mounting bracket (100) according to claim 1, wherein the second mounting region (1221, 1222, 1223, 1224) comprises a first sub-region (1221, 1222) and a second sub-region (1223, 1224), the first sub-region (1221, 1222) is formed as a structure with a first angle (α1) and adapted to be mounted to an interior wall corner (2002), and the second sub-regions (1223, 1224) are formed as a structure with a second angle (α2) and adapted to be mounted to an exterior wall corner (2003).

3. The mounting bracket (100) according to claim 2,
wherein the first sub-region (1221, 1222) of the second mounting region (1221, 1222, 1223, 1224) comprises a third mounting surface (1221) and a fourth mounting surface (1222), an extension plane where the third mounting surface (1221) lies and an extension plane where the fourth mounting surface (1222) lies forming the first angle (α1) to fit the interior wall corner (2002); and
wherein the second sub-region (1223, 1224) of the second mounting region (1221, 1222, 1223, 1224) comprises a fifth mounting surface (1223) and a sixth mounting surface (1224), the fifth mounting surface (1223) and the sixth mounting surface (1224) forming the second angle (α2) to fit the exterior wall corner (2003).

4. The mounting bracket (100) according to claim 3,
wherein the third mounting surface (1221) is located on a side of the first mounting surface (1211) away from the second mounting surface (1212) and obliquely extends from a first edge of the first mounting surface (1211) in a direction toward the first surface (110);
wherein the fourth mounting surface (1222) is located on a side of the second mounting surface (1212) away from the first mounting surface (1211) and obliquely extends from a first edge of the second mounting surface (1212) in a direction toward the first surface (110); and
wherein the fifth mounting surface (1223) and the sixth mounting surface (1224) are located between the first mounting surface (1211) and the second mounting surface (1212), the fifth mounting surface (1223) extends obliquely from a second edge of the first mounting surface (1211) in a direction toward the first surface (110), and the sixth mounting surface (1224) extends obliquely from a second edge of the second mounting surface (1212) in a direction toward the first surface (110).

5. The mounting bracket (100) according to any of claims 2-4, wherein
the second sub-region (1223, 1224) of the second mounting region (1221, 1222, 1223, 1224) is provided with an opening (150) to enable conductor wires or wire conduits (300) to pass through the mounting bracket (100) from a side of the second surface (120) to a side of the first surface (110).

6. The mounting bracket (100) according to any of claims 2-4, wherein the first mounting region (1211, 1212) and each sub-region of the second mounting region (1221, 1222, 1223, 1224) are provided with mounting holes (160), and the first surface (110) is provided with mounting studs (170).

7. The mounting bracket (100) according to any of claims 1-4, wherein the mounting bracket (100) is integrally formed.

8. The mounting bracket (100) according to any of claims 2-4, wherein the first angle (α1) and the second angle (α2) are right angles.

9. A sensor assembly (1000), comprising:
the mounting bracket (100) according to any of claims 1-8; and
a motion sensor (200) engaged to the mounting bracket (100).

## Patentansprüche

1. Montagehalterung (100), wobei die Montagehalterung (100) umfasst:
eine erste Fläche (110), die dafür ausgelegt ist, mit einer zu montierenden Vorrichtung in Eingriff zu treten; und
eine zweite Fläche (120), die der ersten Fläche (110) gegenüberliegt und umfasst:
einen ersten Montagebereich (1211, 1212), der als eine ebene Struktur ausgebildet ist und dafür ausgelegt ist, an einer ebenen Fläche (2001) montiert zu werden, wobei der erste Montagebereich (1211, 1212) eine erste Montagefläche (1211) und eine zweite Montagefläche (1212) umfasst und die erste Montagefläche (1211) und die zweite Montagefläche (1212) voneinander getrennt sind und sich in derselben Ebene erstrecken;
einen zweiten Montagebereich (1221, 1222, 1223, 1224), der als eine abgewinkelte Struktur ausgebildet ist und dafür ausgelegt ist, an einer nicht ebenen Fläche (2002, 2003) montiert zu werden; und **dadurch gekennzeichnet, dass** sie ferner umfasst:
einen ersten Seitenwandabschnitt (130) und/oder einen zweiten Seitenwandabschnitt (140), wobei sich der erste Seitenwandabschnitt (130) von einem Rand des zweiten Montagebereichs (1221, 1222, 1223, 1224) zu einer Position erstreckt, die mit dem ersten Montagebereich (1211, 1212) ausgerichtet ist, wobei der erste Seitenwandabschnitt (130) entfernbar ist und wobei sich der zweite Seitenwandabschnitt (140) von Rändern des ersten Montagebereichs (1211, 1212) und des zweiten Montagebereichs (1221, 1222, 1223, 1224) in einer Richtung zu der ersten Fläche (110) erstreckt, wobei ein Abschnitt (1401) des zweiten Seitenwandabschnitts (140) entfernbar ist.

2. Montagehalterung (100) nach Anspruch 1, wobei der zweite Montagebereich (1221, 1222, 1223, 1224) einen ersten Teilbereich (1221, 1222) und einen zweiten Teilbereich (1223, 1224) umfasst, wobei der erste Teilbereich (1221, 1222) als eine Struktur mit einem ersten Winkel (α1) ausgebildet ist und dafür ausgelegt ist, an einer Innenwandecke (2002) montiert zu werden, und die zweiten Teilbereiche (1223, 1224) als eine Struktur mit einem zweiten Winkel (α2) ausgebildet sind und dafür ausgelegt sind, an einer Außenwandecke (2003) montiert zu werden.

3. Montagehalterung (100) nach Anspruch 2,
wobei der erste Teilbereich (1221, 1222) des zweiten Montagebereichs (1221, 1222, 1223, 1224) eine dritte Montagefläche (1221) und eine vierte Montagefläche (1222) umfasst, wobei eine Erstreckungsebene, in der die dritte Montagefläche (1221) liegt, und eine Erstreckungsebene, in der die vierte Montagefläche (1222) liegt, den ersten Winkel (α1) bilden, um zu der Innenwandecke (2002) zu passen; und
wobei der zweite Teilbereich (1223, 1224) des zweiten Montagebereichs (1221, 1222, 1223, 1224) eine fünfte Montagefläche (1223) und eine sechste Montagefläche (1224) umfasst, wobei die fünfte Montagefläche (1223) und die sechste Montagefläche (1224) den zweiten Winkel (α2) bilden, um zu der Außenwandecke (2003) zu passen.

4. Montagehalterung (100) nach Anspruch 3,
wobei sich die dritte Montagefläche (1221) auf einer Seite der ersten Montagefläche (1211) entfernt von der zweiten Montagefläche (1212) befindet und sich schräg von einem ersten Rand der ersten Montagefläche (1211) in einer Richtung zu der ersten Fläche (110) erstreckt;
wobei sich die vierte Montagefläche (1222) auf einer Seite der zweiten Montagefläche (1212) entfernt von der ersten Montagefläche (1211) befindet und sich schräg von einem ersten Rand der zweiten Montagefläche (1212) in einer Richtung zu der ersten Fläche (110) erstreckt; und
wobei sich die fünfte Montagefläche (1223) und die sechste Montagefläche (1224) zwischen der ersten Montagefläche (1211) und der zweiten Montagefläche (1212) befinden, sich die fünfte Montagefläche (1223) schräg von einem zweiten Rand der ersten Montagefläche (1211) in einer Richtung zu der ersten Fläche (110) erstreckt und sich die sechste Montagefläche (1224) schräg von einem zweiten Rand der zweiten Montagefläche (1212) in einer Richtung zu der ersten Fläche (110) erstreckt.

5. Montagehalterung (100) nach einem der Ansprüche 2 - 4, wobei
der zweite Teilbereich (1223, 1224) des zweiten Montagebereichs (1221, 1222, 1223, 1224) mit einer Öffnung (150) versehen ist, um zu ermöglichen, dass Leiterdrähte oder Drahtleitungen (300) durch die Montagehalterung (100) von einer Seite der zweiten Fläche (120) zu einer Seite der ersten Fläche (110) verlaufen.

6. Montagehalterung (100) nach einem der Ansprüche 2 - 4, wobei der erste Montagebereich (1211, 1212) und jeder Teilbereich des zweiten Montagebereichs (1221, 1222, 1223, 1224) mit Montagelöchern (160) versehen sind und die erste Fläche (110) mit Montagebolzen (170) versehen ist.

7. Montagehalterung (100) nach einem der Ansprüche 1 - 4, wobei die Montagehalterung (100) einstückig ausgebildet ist.

8. Montagehalterung (100) nach einem der Ansprüche 2 - 4, wobei der erste Winkel (α1) und der zweite Winkel (α2) rechte Winkel sind.

9. Sensoranordnung (1000), umfassend:
die Montagehalterung (100) nach einem der Ansprüche 1 - 8; und
einen Bewegungssensor (200), der mit der Montagehalterung (100) in Eingriff steht.

## Revendications

1. Support de montage (100), lequel support de montage (100) comprend :
une première surface (110) adaptée à entrer en prise avec un dispositif à monter ; et
une deuxième surface (120) opposée à la première surface (110) et comprenant :
une première région de montage (1211, 1212) formée comme une structure plane et adaptée à être montée sur une surface plane (2001), dans lequel la première région de montage (1211, 1212) comprend une première surface de montage (1211) et une deuxième surface de montage (1212), et la première surface de montage (1211) et la deuxième surface de montage (1212) sont séparées l'une de l'autre et s'étendent dans le même plan ;
une deuxième région de montage (1221, 1222, 1223, 1224) formée comme une structure angulaire et adaptée à être montée sur une surface non plane (2002, 2003) ;
et **caractérisé en ce qu'**il comprend en outre
une première partie de paroi latérale (130) et/ou une deuxième partie de paroi latérale (140), dans lequel la première partie de paroi latérale (130) s'étend depuis un bord de la deuxième région de montage (1221, 1222, 1223, 1224) jusqu'à une position alignée avec la première région de montage (1211, 1212), la première partie de paroi latérale (130) étant amovible, et dans lequel la deuxième partie de paroi latérale (140) s'étend depuis des bords de la première région de montage (1211, 1212) et de la deuxième région de montage (1221, 1222, 1223, 1224) dans une direction orientée vers la première surface (110), une partie (1401) de la deuxième partie de paroi latérale (140) étant amovible.

2. Support de montage (100) selon la revendication 1, dans lequel la deuxième région de montage (1221, 1222, 1223, 1224) comprend une première sous-région (1221, 1222) et une deuxième sous-région (1223, 1224), la première sous-région (1221, 1222) est formée comme une structure avec un premier angle (α1) et adaptée à être montée sur un coin de paroi intérieure (2002), et les deuxièmes sous-régions (1223, 1224) sont formées comme une structure avec un deuxième angle (α2) et adaptées à être montées sur un coin de paroi extérieure (2003).

3. Support de montage (100) selon la revendication 2,
dans lequel la première sous-région (1221, 1222) de la deuxième région de montage (1221, 1222, 1223, 1224) comprend une troisième surface de montage (1221) et une quatrième surface de montage (1222), un plan d'extension où se trouve la troisième surface de montage (1221) et un plan d'extension où se trouve la quatrième surface de montage (1222) formant le premier angle (α1) pour s'adapter au coin de paroi intérieure (2002) ; et
dans lequel la deuxième sous-région (1223, 1224) de la deuxième région de montage (1221, 1222, 1223, 1224) comprend une cinquième surface de montage (1223) et une sixième surface de montage (1224), la cinquième surface de montage (1223) et la sixième surface de montage (1224) formant le deuxième angle (α2) pour s'adapter au coin de la paroi extérieure (2003).

4. Support de montage (100) selon la revendication 3,
dans lequel la troisième surface de montage (1221) est située sur un côté de la première surface de montage (1211) éloigné de la deuxième surface de montage (1212) et s'étend obliquement à partir d'un premier bord de la première surface de montage (1211) dans une direction orientée vers la première surface (110) ;
dans lequel la quatrième surface de montage (1222) est située sur un côté de la deuxième surface de montage (1212) éloigné de la première surface de montage (1211) et s'étend obliquement à partir d'un premier bord de la deuxième surface de montage (1212) dans une direction orientée vers la première surface (110) ; et
dans lequel la cinquième surface de montage (1223) et la sixième surface de montage (1224) sont situées entre la première surface de montage (1211) et la deuxième surface de montage (1212), la cinquième surface de montage (1223) s'étend obliquement à partir d'un deuxième bord de la première surface de montage (1211) dans une direction orientée vers la première surface (110), et la sixième surface de montage (1224) s'étend obliquement à partir d'un deuxième bord de la deuxième surface de montage (1212) dans une direction orientée vers la première surface (110).

5. Support de montage (100) selon l'une quelconque des revendications 2 à 4, dans lequel la deuxième sous-région (1223, 1224) de la deuxième région de montage (1221, 1222, 1223, 1224) est pourvue d'une ouverture (150) pour permettre à des fils conducteurs ou à des conduits de fils (300) de passer à travers le support de montage (100) depuis un côté de la deuxième surface (120) vers un côté de la première surface (110).

6. Support de montage (100) selon l'une quelconque des revendications 2 à 4, dans lequel la première région de montage (1211, 1212) et chaque sous-région de la deuxième région de montage (1221, 1222, 1223, 1224) sont pourvues de trous de montage (160), et la première surface (110) est pourvue de goujons de montage (170).

7. Support de montage (100) selon l'une quelconque des revendications 1 à 4, dans lequel le support de montage (100) est formé d'un seul tenant.

8. Support de montage (100) selon l'une quelconque des revendications 2 à 4, dans lequel le premier angle (α1) et le deuxième angle (α2) sont des angles droits.

9. Ensemble capteur (1000), comprenant :
le support de montage (100) selon l'une quelconque des revendications 1 à 8 ; et
un capteur de mouvement (200) en prise avec le support de montage (100).
